(19) Europäisches Patentamt
European Patent Office
Office européen des brevets

(11) Veröffentlichungsnummer: **0 620 237 A2**

(12) **EUROPÄISCHE PATENTANMELDUNG**

(21) Anmeldenummer: **94102104.0**

(22) Anmeldetag: **11.02.94**

(51) Int. Cl.5: **C08G 18/10**, C08G 18/32, C09D 175/04

(30) Priorität: **10.04.93 DE 4311923**

(43) Veröffentlichungstag der Anmeldung: **19.10.94 Patentblatt 94/42**

(84) Benannte Vertragsstaaten: **AT BE CH DE ES FR GB IT LI NL**

(71) Anmelder: **HÜLS AKTIENGESELLSCHAFT**
**D-45764 Marl (DE)**

(72) Erfinder: **Lomölder, Rainer, Dr.**
**Gigasstrasse 40 b**
**D-48153 Münster (DE)**
Erfinder: **Speier, Peter**
**Hammkamp 13**
**D-45768 Marl (DE)**

(54) **Zweikomponentig zu verarbeitende Beschichtungszusammensetzung zur Herstellung von PUR-Elastomeren.**

(57) Die Erfindung betrifft zweikomponentig zu verarbeitende lösemittelfreie oder lösemittelarme Beschichtungszusammensetzung zur Herstellung von PUR-Elastomeren aus einer Isocyanatkomponente A und einer Härterkomponente B sowie in der Beschichtungstechnologie bekannten Hilfs- und Zuschlagsmitteln, welche dadurch gekennzeichnet ist, daß sie enthält

A) ein aliphatisches oder cycloaliphatisches Polyisocyanat-Prepolymer mit einem NCO-Gehalt von 1 bis 15 Massen-%,

B 1) ein Diketimin der allgemeinen Formel I

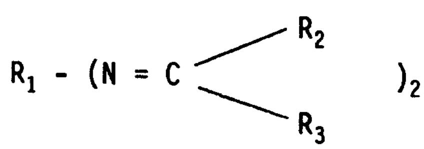

in der $R_1$ einen Alkylenrest mit 2 bis 20 C-Atomen, einen Sauerstoff und/oder N-Alkylgruppen als Brückenglieder enthaltenden Alkylenrest von 4 bis 100 C-Atomen, einen Cycloalkylenrest mit 5 bis 20 C-Atomen, $R_2$, $R_3$ gleiche oder verschiedene Alkylenreste mit 1 bis 8 C-Atomen bedeuten bzw. $R_2$ und $R_3$ mit dem an das Stickstoffatom doppelt gebundenen C-Atom einen 5- oder 6-gliedrigen Ring bilden und

B 2) eine aromatische oder aliphatische Carbon- oder Sulfonsäure.

EP 0 620 237 A2

Die vorliegende Erfindung betrifft eine lösemittelfreie oder lösemittelarme, zweikomponentig zu verarbeitende Beschichtungszusammensetzung und ihre Verwendung zur Herstellung von Elastomeren.

Lösemittelarme oder lösemittelfreie Polyisocyanat-Prepolymere auf Basis aliphatischer oder cycloaliphatischer Diisocyanate finden wegen ihres hervorragenden Härte-/Elastizitätsverhältnisses, der ausgezeichneten Lichtstabilität und der guten Verarbeitungseigenschaften breite Anwendung im Bereich der Dickschichtapplikation, wie z. B. als Fugenabdichtungen, als Dach- und Fußbodenbeschichtungen oder auch Fenstereinklebungen.

Zur gleichmäßigen und vollständigen Aushärtung über den gesamten Schichtdickenbereich werden bei einer zweikomponentigen Anwendung den Prepolymeren kurz vor der Verarbeitung reaktionsträge aromatische Diamine, z. B. 3,5-Diethyl-2,4-Toluoldiamin und 3,5-Diethyl-2,6-Toluoldiamin (DETDA 80), zugesetzt. Aufgrund ihrer abgeschwächten Reaktivität gegenüber aliphatischen und cycloaliphatischen Isocyanatgruppen ist eine vertretbare Balance zwischen Verarbeitungs- und Durchhärtungszeit gegeben. Als Nachteile dieser Härterklasse ist die intensive Eigenfarbe der Härter, die hohe Vergilbungsanfälligkeit der gehärteten Elastomeren sowie eine häufig hohe Toxizität der aromatischen Diamine zu nennen.

Die als Härterkomponente hinsichtlich ihrer Toxizität und der Bewitterungsstabilität der gehärteten Materialien günstiger einzustufenden aliphatischen oder cycloaliphatischen Diamine sind in der Regel gegenüber Isocyanaten zu reaktiv, um eine ausreichende Verarbeitungszeit zu gewährleisten.

Gemäß *EP–A 359 456* finden blockierte aliphatische oder cycloaliphatische Diamine in Form von z. B. Ketiminen oder Aldiminen aufgrund ihrer abgeschwächten Reaktivität Einsatz in der RIM-Technologie als Härter für aromatische Polyisocyanate.

Gegenüber aliphatischen oder cycloaliphatischen Polyisocyanaten sind diese Verbindungen häufig derart stabil, daß sie im Bereich der Lacktechnologie Verwendung in lagerstabilen, einkomponentigen, lösemittelhaltigen, über Feuchtigkeit, d. h. Hydrolyse des Ketimins oder Aldimins abreagierenden Lacksystemen in der Applikation dünner Schichten, finden (*DE–OS 15 20 139, US–PS 3 523 925, US–PS 3 493 543, US–PS 3 535 353, s. a. Becker/Braun, Kunststoffhandbuch, Bd. 7: Polyurethane, Hanser–Verlag, 1983, S. 427 f*).

Auch im Bereich lösemittelarmer bzw. lösemittelfreier Einkomponenten-Systeme für sehr weiche, hochelastische Elastomermaterialien werden derartige latente Amine als Härter für Isocyanat-Prepolymere in Kombination mit Feuchtigkeit eingesetzt, u. a. auch in Form von bestimmten Aldiminen mit lagerstabilitätsfördernder sterischer Hinderung, z. B. nach *DE–OS 33 06 373*. In genannter DE-OS muß jedoch die Reaktivität durch Zusatz von Säuren erhöht werden.

Alle auf Ket- und Aldiminen als latente Härter und Polyisocyanat-Prepolymeren basierenden Einkomponentensysteme verfügen über eine geringe Grundreaktivität, damit eine ausreichende Lagerstabilität über mehrere Monate gewährleistet werden kann. Die geringe Reaktivität hat aber bei Applikation als Dickschichtsystem, vor allem bei härteren Elastomeren, unzureichende Durchhärtungszeiten zur Folge. Zusätzlich wird im Falle von Aldiminen dabei aufgrund der direkten Wasser-/Isocyanat-Konkurrenzreaktion häufig eine unerwünschte Aufschäumung des Elastomers beobachtet.

Es war Aufgabe der Erfindung, eine zweikomponentig zu verarbeitende Beschichtungszusammensetzung auf Basis von aliphatischen oder cycloaliphatischen Polyisocyanat-Prepolymeren und geeignetem Härter unter Ausschaltung der geschilderten Nachteile zu entwickeln, d. h. eine Beschichtungszusammensetzung hoher Reaktivität, kurzer Durchhärtungszeit und breiter Anwendbarkeit in verschiedenen Härtebereichen ohne Aufschäumung des Elastomermaterials durch Wasser-/Isocyanat-Reaktion.

Überraschenderweise zeigte sich, daß eine Beschichtungszusammensetzung aus Diketiminen auf Basis aliphatischer oder cycloaliphatischer Ketone und aliphatischer oder cycloaliphatischer Diamine, aliphatischer oder aromatischer Carbon- oder Sulfonsäuren und aliphatischer oder cycloaliphatischer Polyisocyanat-Prepolymeren diese Forderung erfüllen.

Gegenstand der Erfindung ist eine zweikomponentig zu verarbeitende lösemittelfreie oder lösemittelarme Beschichtungszusammensetzung zur Herstellung von PUR-Elastomeren aus einer Isocyanatkomponente A und einer Härterkomponente B sowie in der Beschichtungstechnologie bekannten Hilfs- und Zuschlagsmitteln, welche dadurch gekennzeichnet ist, daß sie enthält

A) ein aliphatisches oder cycloaliphatisches Polyisocyanat-Prepolymer mit einem NCO-Gehalt von 1 bis 15 Massen-%,

B 1) ein Diketimin der allgemeinen Formel

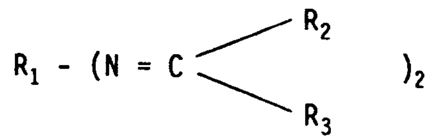

in der $R_1$ einen Alkylenrest mit 2 bis 20 C-Atomen, einen Sauerstoff und/oder N-Alkylgruppen als Brückenglieder enthaltenden Alkylenrest von 4 bis 100 C-Atomen, einen Cycloalkylenrest mit 5 bis 20 C-Atomen, $R_2$, $R_3$ gleiche oder verschiedene Alkylenreste mit 1 bis 8 C-Atomen bedeuten bzw. $R_2$ und $R_3$ mit dem an das Stickstoffatom doppelt gebundenen C-Atom einen 5- oder 6-gliedrigen Ring bilden und B 2) eine aromatische oder aliphatische Carbon- oder Sulfonsäure.

Die erfindungsgemäße Beschichtungszusammensetzung betrifft nach A) aliphatische oder cycloaliphatische Polyisocyanat-Prepolymere mit einem Isocyanatgehalt von 1 bis 15 %, wie sie durch die bekannte Additionsreaktion von überschüssigen aliphatischen oder cycloaliphatischen Diisocyanatverbindungen an Polyhydroxylkomponenten gewonnen werden. Als Diisocyanatverbindungen kommen aliphatische Diisocyanate wie Hexamethylendiisocyanat, 2-Methylpentandiisocyanat, 2,2,4- und 2,4,4-Trimethylhexamethylendiisocyanat, bevorzugt jedoch cycloaliphatische Diisocyanate wie 1,4-Diisocyanatocyclohexan, 2,4'- oder 4,4'-Diisocyanatodicyclohexylmethan in Betracht. Besonders bevorzugt wird 1-Isocyanato-3,5,5-trimethyl-5-isocyanatomethylcyclohexan (Isophorondiisocyanat, IPDI).

Diese Polyisocyanat-Prepolymere können auch mit reinen Polyisocyanaten der obengenannten Diisocyanate, wie sie z. B. durch Isocyanuratring- oder Biuretbildung erhalten werden, abgemischt sein. Als bevorzugtes Diisocyanat ist hier Hexamethylendiisocyanat und besonders bevorzugt IPDI zu nennen.

Die Herstellung der erfindungsgemäß einzusetzenden Polyisocyanat-Prepolymeren mit einem NCO-Gehalt von 1 bis 15 % erfolgt durch Addition von Diisocyanat an die Polyhydroxylkomponente, wobei vorzugsweise ein NCO/OH-Verhältnis von 1,5 : 1 bis 5 : 1 eingehalten wird und das überschüssige monomere Diisocyanat auch destillativ abgetrennt werden kann.

Die Umsetzung von Diisocyanat und Polyolkomponente kann in Lösemittel erfolgen, bevorzugt wird jedoch lösemittelfrei gearbeitet. Die Herstellung erfolgt bei 20 bis 90 °C, gegebenenfalls unter Verwendung der in der Urethanchemie gängigen Katalysatoren, wie z. B. tert.-Amine, Sn- oder Zn-Salze. Als Polyolkomponenten werden bevorzugt Polyole im Molekulargewichtsbereich von 500 bis 6 000 g/mol mit einer mittleren Funktionalität von 2 bis 3 eingesetzt. Die erfindungsgemäßen Polyolkomponenten sind lösemittelarm mit mindestens 90 Gew.-% nichtflüchtigen Anteilen, bevorzugt jedoch lösemittelfrei. Als Polyolkomponente eignen sich Polyesterpolyole, Polyetherpolyole oder Polycarbonatpolyole, auch Mischpolymere dieser Materialien oder auch Gemische der Polymeren; bevorzugt sind Polyesterpolyole und besonders bevorzugt Polyetherpolyole.

Polyesterpolyole werden durch Veresterung oder Umesterung von zweiwertigen aliphatischen oder aromatischen, bevorzugt jedoch aliphatischen Carbonsäuren oder -estern und 2- oder mehrwertigen Alkoholen hergestellt. Beispielhafte Dicarbonsäuren sind Bernsteinsäure, Glutarsäure, Adipinsäure, 2,2,4- und 2,4,4-Trimethyladipinsäure, Azelainsäure, Dodecandisäure, Phthalsäure, Isophthalsäure, Terephthalsäure. Als zwei- oder mehrwertige Alkohole eignen sich Ethylenglykol, Propylenglykol, 1,4-Butandiol, 1,6-Hexandiol, 3-Methylpentandiol, 2,2,4- und 2,4,4-Trimethylhexandiol-1,6, Decandiol, Neopentylglykol und Trimethylolpropan.

Die Umsetzung von Polyolkomponente und Diisocyanat kann auch unter Verwendung eines niedermolekularen Kettenverlängerers wie Diolen mit Molekulargewichten von 60 bis 200 erfolgen.

Die Funktionalität der Polyesterpolyole beträgt 2 bis 3, bevorzugt jedoch 2. Das Molekulargewicht liegt zwischen 500 bis 3 000. Erfindungsgemäße Polyesterpolyole sind auch Polycaprolactone, die durch Addition von Caprolacton an di- oder trifunktionelle Alkohole, wie z. B. Ethylenglykol, Propylenglykol, 1,4-Butandiol, 1,6-Hexandiol oder Trimethylolpropan, gewonnen werden können.

Die Herstellung der erfindungsgemäß bevorzugten Polyetherpolyole erfolgt durch Polymerisation von Alkylenoxiden, wie z. B. Ethylenoxid, Propylenoxid oder Tetrahydrofuran unter Verwendung eines di- oder trifunktionellen Startermoleküls mit aktiven Nasserstoffatomen, wie z. B. Nasser, Ethylenglykol, Propylenglykol, Butandiol oder Trimethylolpropan.

Auch Mischpolymerisate der genannten Alkylenoxide oder auch Umsetzungsprodukte der Polyetherpolyole mit Lactonen, wie z. B. Caprolacton, sind einsetzbar.

Polyetherpolyole besitzen ein Molekulargewicht von 500 bis 66 000 g/mol, vorzugsweise 600 bis 3 500 g/mol, und eine Funktionalität von 2 bis 3.

Die Herstellung der erfindungsgemäß einsetzbaren Polycarbonatdiole erfolgt durch Umsetzung von niedermolekularen Diolen mit Diarylcarbonaten, wie z. B. Diphenylcarbonat, Dialkylcarbonaten, wie z. B.

Dimethylcarbonat, cyclischen Carbonaten oder Phosgen. Als geeignete Diole sind Propandiol-1,3, Butandiol-1,4, 3-Methylpentandiol-1,5, Hexandiol-1,6, 2,2,4- oder 2,4,4-Trimethylhexandiol, Diethylenglykol, Triethylenglykol, Tetraethylenglykol oder Gemische dieser Diolkomponenten zu benennen.

Die erfindungsgemäße Beschichtungszusammensetzung betrifft nach B 1) aliphatische oder cycloaliphatische Ketimine, die durch Umsetzung aliphatischer oder cycloaliphatischer Ketone unter gleichzeitiger Abtrennung des im Reaktionsgemisch anfallenden Wassers - z. B. azeotrope Destillation - gewonnen werden. Die Herstellung erfolgt mit einem mindestens äquivalenten Verhältnis aus Amin- und Ketongruppen, d. h. das $NH_2/C=O$-Verhältnis beträgt mindestens 1 : 1, bevorzugt 1 : 1 bis 1 : 3, in einem inerten Lösemittel, das zur azeotropen Entfernung des Reaktionswassers geeignet ist, z. B. Toluol, Benzol, Heptan. Eignet sich das Keton als Schleppmittel, so kann bei Verwendung eines $NH_2/C=O$-Verhältnisses von 1 : 2 bis 1 : 20 der Einsatz der obengenannten beispielhaften Lösemittel entfallen. In diesen Fällen ist diese Variante bevorzugt. Nach vollständiger Wasserabtrennung werden überschüssiges Keton und ggf. Lösemittel abdestilliert. Gegebenenfalls kann das Diketimin destillativ gereinigt werden.

Zur Herstellung der aliphatischen oder cycloaliphatischen Ketimine eignen sich Diamine mit 2 bis 20 C-Atomen, als aliphatische Diamine sind beispielhaft 1,4-Diaminobutan, 1,5-Diaminopentan, 2-Methyl-1,5-diaminopentan, 1,6-Diaminohexan, 2,2,4- und/oder 2,4,4-Trimethyl-1,6-diaminohexan, 1,12-Diaminododecan, als cycloaliphatische Diamine 4,4- oder 2,4-Diaminodicyclohexylmethan, 3,3'-Dimethyl-4,4'-diaminodicyclohexylmethan und 1-Amino-3,5,5-trimethyl-3-aminomethylcyclohexan (Isophorondiamin), zu benennen. Bevorzugt werden 1,6-Diaminohexan, 2,2,4- und/oder 2,4,4-Trimethyl-1,6-diaminohexan, besonders bevorzugt ist Isophorondiamin.

Auch Polyethylen- und Polypropylenoxid-basierende Diamine, wie sie unter der Bezeichnung JEFFAMINE® bekannt sind, eignen sich zur Herstellung höhermolekularer Ketimine.

Zur Herstellung der erfindungsgemäßen Diketimine werden aliphatische oder cycloaliphatische Ketone mit 3 bis 15 C-Atomen eingesetzt. Beispiele für geeignete aliphatische Ketone sind: Aceton, Methylethylketon, Methyl-n-propylketon, Methylisopropylketon, Diethylketon, Diisopropylketon, Methylisobutylketon, Methylisoamylketon, Diisobutylketon, für cycloaliphatische Ketone Cyclopentanon, Cyclohexanon, 3,3,5-Trimethylcyclohexanon. Bevorzugt wird Methylisobutylketon.

Als Komponente B 2 in der erfindungsgemäßen Beschichtungszusammensetzung finden aliphatische oder aromatische Carbonsäuren oder Sulfonsäuren Verwendung. Als aliphatische Carbonsäuren sind Ameisensäure, Essigsäure, Monochloressigsäure, Dichloressigsäure, Trichloressigsäure, 2-Ethylhexansäure, als aromatische Carbonsäuren Benzoesäure, Salicylsäure, als Sulfonsäure p-Toluolsulfonsäure, beispielhaft genannt. Bevorzugt wird 2-Ethylhexansäure verwendet. Besonders bevorzugt werden 0,05 bis 3 % der Komponente B 2), bezogen auf Gesamtbindemittel der Komponenten A) und B), eingesetzt. Unter der katalytischen Wirkung der Säuren in Gegenwart von Feuchtigkeit entstehen aus den Diketiminen Amine, die dann mit der Isocyanatkomponente reagieren.

In einer weniger bevorzugten Ausführungsform können als Komponente A) auch teilsilanisierte Polyisocyanat-Prepolymere, wie z. B. in *DE–OS 37 23 936* beschrieben, oder Mischungen von vollsilanisierten Prepolymeren, wie z. B. in *DE–PS 27 38 979, DE–OS 36 29 237* beschrieben, mit Polyisocyanat-Prepolymeren eingesetzt werden.

Eine weitere, jedoch weniger bevorzugte Ausführungsform besteht in der Mischung der Komponente B) mit anderen Isocyanat-reaktiven Verbindungen wie Di- und Polyolen oder Diaminen. Als Diamine werden bevorzugt die bereits zur Herstellung der Ketimine herangezogenen Diamine eingesetzt, wie z. B. Isophorondiamin, 4,4'- oder 2,4'-Diaminodicyclohexylmethan, 3,3'-Dimethyl-4,4'-Diaminodicyclohexylmethan.

Kurz vor der Applikation erfolgt die Mischung der Komponenten A) und B). Zu einer erfindungsgemäß bevorzugten Ausführungsform erfolgt die Mischung solcher Mengen der Komponenten A) und B), daß das Verhältnis zwischen NCO- und latenten Amingruppen 1,4 : 1 bis 1 : 1, besonders bevorzugt 1,1 : 1 bis 1 : 1, beträgt.

Die Mischung kann zur Viskositätssenkung mit geringen Mengen Lösemittel, vorzugsweise maximal 10 %, besonders bevorzugt maximal 5 %, versetzt werden. Ferner können in der erfindungsgemäßen Beschichtungszusammensetzung die in der Beschichtungstechnologie gängigen Zuschlagstoffe wie Pigmente, Füllstoffe, Farbstoffe, Weichmacher, Verdickungsmittel, Haftvermittler, UV-Absorber, Oxidationsstabilisatoren, HALS-Stabilisatoren und gängigen Katalysatoren der Urethanchemie, wie z. B. tertiäre Amine, zugesetzt werden.

Das Verhältnis der Summe der Massenteile der nichtflüchtigen Anteile der Komponenten A) und B) und der Summe der Massenteile der in diesen Komponenten enthaltenen Lösemittel liegt bevorzugt im Bereich von 90 : 10 bis 100 : 0.

Die in den folgenden Beispielen genannten Teile beziehen sich auf das Gewicht.

Beispiel 1

**Diketimin 1**

158 Gew.-Teile eines Gemisches aus 2,2,4- und 2,4,4-Trimethyl-1,6-Diaminohexan werden mit 400 Gew.-Teilen Methylisobutylketon gemischt und an einem Wasserabscheider auf maximal 130 °C erwärmt. Nach ca. 8 h sind 36 Gew.-Teile Wasser abgeschieden. Das überschüssige Keton wird unter vermindertem Druck abdestilliert. Das durch Titration bestimmte Amin-Äquivalent des flüssigen, gelblichen Rückstands beträgt 162 g/val.

Beispiel 2

**Diketimin 2**

170 Gew.-Teile 1-Amino-3,5,5-trimethyl-3-aminomethylcyclohexan (Isophorondiamin) werden mit 400 Gew.-Teilen Methylisobutylketon gemischt und analog zu Diketimin 1 umgesetzt und aufgearbeitet (Abscheidung von 36 Gew.-Teilen Wasser). Man erhält als Rückstand eine gelbliche Flüssigkeit mit einem Amin-Äquivalentgewicht von 167 g/val.

Beispiel 3

**Diketimin 3**

116 Gew.-Teile 2-Methyl-1,5-diaminopentan werden mit 400 Gew.-Teilen Methylisobutylketon analog zu Diketimin 1 und Diketimin 2 zur Reaktion gebracht und nach Abscheidung von 36 Gew.-Teilen Wasser aufgearbeitet. Äquivalentgewicht des gelblichen Rückstandes: 141 g/val.

Beispiel 4 - Vergleich

**Dialdimin 1**

170 Gew.-Teile Isophorondiamin werden mit 200 Gew.-Teilen Isobutyraldehyd und 200 g Toluol bei Raumtemperatur gemischt, 1 h reagieren gelassen und anschließend am Wasserabscheider bei maximal 130 °C erhitzt. Nach 6 h sind 36 Gew.-Teile Wasser abgetrennt. Das Toluol und der überschüssige Isobutyraldehyd werden unter vermindertem Druck abdestilliert. Das Äquivalentgewicht wurde mit 140 g/val bestimmt.

Beispiel 5

**Polyisocyanat-Prepolymer 1**

1 750 Gew.-Teile eines auf Trimethylolpropan gestarteten Copolymeren aus Ethylenoxid und Propylenoxid mit Molmasse ca. 3 500 g/mol werden mit 333 Gew.-Teilen Isophorondiisocyanat und 2 g Dibutylzinndilaurat (DBTL) versetzt und 5 h bei 50 °C gerührt. Nach Abkühlen erhält man ein Polyisocyanat-Prepolymermit 2,8 % NCO und einer Viskosität von 13 000 mPa•s bei 25 °C.

Beispiel 6

**Polyisocyanat-Prepolymer 2**

Zu 593 Gew.-Teilen eines Polytetrahydrofurandiols mit Molmasse ca. 650 g/mol werden 1 Gew.-Teil DBTL und 406 g Isophorondiisocyanat gegeben. Die Mischung wird 5 h bei 50 °C gerührt. Nach Abkühlen erhält man ein Polyisocyanat-Prepolymer mit 7,3 % NCO und einer Viskosität von 23 000 mPa•s bei 25 °C.

Beispiele 7 bis 11 und Vergleichsbeispiele 12 und 13

In den Beispielen 7 bis 11 werden die Polyisocyanat-Prepolymere 1 und 2 bzw. Mischungen aus diesen Produkten mit einer Mischung eines der Diketimine 1 bis 3 mit 0,5 % 2-Ethylhexansäure (bezogen auf die Gesamtformulierung) im NCO-latenten $NH_2$-Verhältnis von 1,05 : 1 gehärtet.

In den Vergleichsbeispielen 12 und 13 ist eine Umsetzung mit einem Diketimin ohne Zusatz von 2-Ethylhexansäure bzw. eine Härtung mit dem Dialdimin 1 aus Beispiel 4 und Zusatz von 2-Ethylhexansäure beschrieben.

Die lösemittelfreien zweikomponentigen Systeme werden mit einer Schichtdicke von 6 mm aufgetragen, der Härtungsverlauf bei 23 °C und 5 °C anhand der Shore-A-Härte verfolgt.

Zusammensetzung der Zweikomponenten-Beschichtungssysteme in Gew.-Teilen

| Beispiel | Prepolymer Beispiel 5 | Prepolymer Beispiel 6 | Di-Ketimin 1 Beispiel 1 | Di-Ketimin 2 Beispiel 2 | Di-Ketimin 3 Beispiel 3 | Di-Aldimin 1 Beispiel 4 | 2-EHS |
|---|---|---|---|---|---|---|---|
| 7 | 42,00 | 42,00 | 15,5 | - | - | - | 0,5 |
| 8 | 42,80 | 42,80 | - | - | 13,9 | - | 0,5 |
| 9 | 41,80 | 41,80 | - | 15,9 | - | - | 0,5 |
| 10 | 78,0 | - | - | 21,5 | - | - | 0,5 |
| 11 | - | 90,0 | - | 9,5 | - | - | 0,5 |
| 12 | 42,0 | 42,0 | - | 16,0 | - | - | - |
| 13 | 42,9 | 42,9 | - | - | - | 13,7 | 0,5 |

Härtungsverlauf der PU-Elastomere (Schichtdicke 6 mm)

| | Beispiel 7 | Beispiel 8 | Beispiel 9 | Beispiel 10 | Beispiel 11 | Vergl.-Beispiel 12 | Verg.-Beispiel 13 |
|---|---|---|---|---|---|---|---|
| Härtung bei 23 °C: Shore-A-Härte nach Tagen [d] | | | | | | | |
| 1 d | x1 | 42 | 36 | 44 | x1 | x1 | x1 |
| 3 d | 45 | 45 | 50 | 73 | 46 | x1 | x1 |
| 5 d | 45 | 45 | 66 | 84 | 50 | x1 | x1 |
| 7 d | 46 | 45 | 70 | 87 | 51 | 37 | x2 |
| 14 d | 47 | 46 | 73 | 89 | 52 | 45 | x2 |
| Härtung bei 5 °C: Shore-A-Härte nach Tagen [d] | | | | | | | |
| 1 d | x1 | x1 | x1 | x1 | x1 | x1 | x1 |
| 3 d | 32 | 47 | 44 | 63 | 23 | x1 | x1 |
| 5 d | 36 | 48 | 60 | 82 | 38 | x1 | x1 |
| 7 d | 44 | 48 | 69 | 86 | 42 | x1 | x1 |
| 14 d | 46 | 49 | 75 | 90 | 50 | 44 | x1 |

x1 = Hautbildung an der Oberfläche, Untergrund flüssig
x2 = Stark geschäumt

## Patentansprüche

1. Zweikomponentig zu verarbeitende lösemittelfreie oder lösemittelarme Beschichtungszusammensetzung zur Herstellung von PUR-Elastomeren aus einer Isocyanatkomponente A und einer Härterkomponente B sowie in der Beschichtungstechnologie bekannten Hilfs- und Zuschlagsmitteln, dadurch

gekennzeichnet, daß sie enthält

A) ein aliphatisches oder cycloaliphatisches Polyisocyanat-Prepolymer mit einem NCO-Gehalt von 1 bis 15 Massen-%,

B 1) ein Diketimin der allgemeinen Formel I

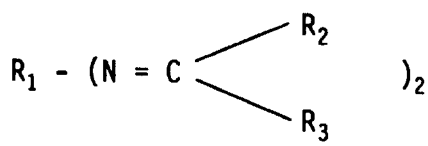

in der $R_1$ einen Alkylenrest mit 2 bis 20 C-Atomen, einen Sauerstoff und/oder N-Alkylgruppen als Brückenglieder enthaltenden Alkylenrest von 4 bis 100 C-Atomen, einen Cycloalkylenrest mit 5 bis 20 C-Atomen, $R_2$, $R_3$ gleiche oder verschiedene Alkylenreste mit 1 bis 8 C-Atomen bedeuten bzw. $R_2$ und $R_3$ mit dem an das Stickstoffatom doppelt gebundenen C-Atom einen 5- oder 6-gliedrigen Ring bilden und

B 2) eine aromatische oder aliphatische Carbon- oder Sulfonsäure.

**2.** Beschichtungszusammensetzung gemäß Anspruch 1,
dadurch gekennzeichnet,
daß Polyisocyanat-Prepolymere auf Basis cycloaliphatischer Diisocyanate und Polyolen im Molgewichtsbereich von 500 bis 6 000 g/mol mit einer mittleren Funktionalität von 2 bis 3 verwendet werden.

**3.** Beschichtungszusammensetzung gemäß Anspruch 1,
dadurch gekennzeichnet,
daß Polyisocyanat-Prepolymere auf Basis 1-Isocyanato-3,5,5-trimethyl-3-isocyanatomethyl-cyclohexan verwendet werden.

**4.** Beschichtungszusammensetzung gemäß Anspruch 1,
dadurch gekennzeichnet,
daß als Komponente B 1) Verbindungen verwendet werden, die gemäß Formel I einen Rest $R_1$ enthalten, wie er durch Entfernung der Aminogruppen von 2-Methyl-1,5-diaminopentan, 1,6-Diaminohexan, 2,2,4- und/oder 2,4,4-Trimethyl-1,6-diaminohexan, 1-Amino-3,5,5-trimethyl-3-aminomethylcyclohexan, 3,3'-Dimethyl-4,4'-diaminodicyclohexylmethan, 4,4'-Diaminodicyclohexylmethan entsteht.

**5.** Beschichtungszusammensetzung gemäß Anspruch 1,
dadurch gekennzeichnet,
daß als Komponente B 1) Verbindungen gemäß Formel I gewählt werden, die als Reste $R_1$ bzw. $R_2$ Methyl-, Ethyl-, Isopropyl- oder 2-Methylpropylgruppen enthalten.

**6.** Beschichtungszusammensetzung gemäß Anspruch 1,
dadurch gekennzeichnet,
daß als Komponente B 2) 2-Ethylhexansäure, Benzoesäure, Salicylsäure oder p-Toluolsulfonsäure verwendet werden.

**7.** Beschichtungszusammensetzung gemäß Anspruch 1,
dadurch gekennzeichnet,
daß der relative Massenanteil der Komponente B 2), bezogen auf die Summe der Massenteile der Komponenten A) und B) 0,05 bis 3 % beträgt.

**8.** Beschichtungszusammensetzung gemäß Anspruch 1,
dadurch gekennzeichnet,
daß das Äquivalentverhältnis zwischen den NCO-Gruppen der Polykomponente A) und den latenten Aminogruppen der Komponente B) 1,4 : 1 bis 1 : 1 beträgt.

**9.** Beschichtungszusammensetzung gemäß Anspruch 1,
dadurch gekennzeichnet,

daß das Verhältnis der Summe der Massenteile der nichtflüchtigen Anteile der Komponenten A) und B) und der Summe der Massenteile der in diesen Komponenten enthaltenen Lösemittel 90 : 10 bis 100 : 0 beträgt.